# EUROPEAN PATENT APPLICATION

(11) **EP 2 630 871 A1**
(43) Date of publication of application: **28.08.2013**
(21) Application number: 11834375.5
(22) Date of filing: 19.10.2011
(51) Int. Cl.: A23G 3/50, A21D 13/00

(54) **HOLLOW CONFECTIONARY AND METHOD FOR MANUFACTURING SAME**

(30) Priority: 19.10.2010 JP 2010234488
(71) Applicant: Otsuka Pharmaceutical Co., Ltd., Tokyo 101-8535 (JP)
(72) Inventor: YAMADA, Kaoru, Osaka-shi Osaka 541-0045 (JP)
(74) Representative: HOFFMANN EITLE
(86) International application number: PCT/JP2011/074014
(87) International publication number: WO 2012/053536

(57) **Abstract**

This invention provides a food product that allows intake of all of the nutritional components of soybeans, has no smell of raw soybeans, has good flavor, is easy to eat, can increase the soybean content, and can be eaten by children and adults. Provided is a hollow confectionery obtained by baking dough comprising soybeans, a starch, and a pregelatinized starch.

## Description

### Technical Field

The present invention relates to a hollow confectionery using soybeans as a starting material, and a method for producing the same.

### Background Art

Soybeans are rich in nutrition and have attracted attention as a resource for various isoflavones that are effective in preventing cancer and heart disease, as well as effective in improving osteoporosis and climacteric disturbance. For example, green soybeans, bean sprouts, boiled beans, roasted beans, soybean flour, fermented soybeans, soybean paste, soy sauce, soybean milk, bean curd skin, soy pulp (Okara), tofu, freeze-dried tofu, fried tofu, deep-fried tofu, etc., are known as food products using soybean components as starting materials. However, many of these food products are mainly eaten at mealtimes, and are less suitable as easy-to-eat food at snack time or when going out. Moreover, among the aforementioned food products, roasted beans obtained by roasting whole soybeans have a hard texture. Therefore, roasted beans are hard to eat for infants and people with weak teeth.

In addition to roasted beans, tofu, and other food products as described above, some bread- and cookie-like confectioneries are known as processed food products using soybean components as starting materials. For example, PTL 1 to PTL 3 disclose techniques for producing confectioneries using, in order to remove the smell of raw soybeans, only soybean protein separated from soybeans, rather than using all of the soybean components by forming soybeans into powder. In PTL 1 to PTL 3, gelling soybean protein, starches, egg components, swelling agents, foaming agents, etc., are used to solve the problem that swelling is reduced by using soybean protein in place of all or part of wheat flour, which is conventionally used as an ingredient for confectionery.

Specifically, PTL 1 discloses a bread-like puffed food product obtained by heating dough comprising soybean protein, starches, an egg component, and a leavening agent (e.g., baking powder) at a constant ratio. PTL 2 discloses a bread-like puffed food product produced by heating dough comprising soybean protein, starches, dietary fiber, and a vegetable foaming agent (e.g., enzymatic decomposition soybean protein or finely powdered cellulose-based foaming agent) at a constant ratio. PTL 3 discloses bread- and cookie-like puffed food products obtained by heating dough comprising gelling soybean protein, non-gelling soybean protein, a foaming agent containing freeze-dried yam, and glutinous rice flour at a given ratio.

### Citation List

### Patent Literature

PTL 1: Japanese Patent No. 3455961
PTL 2: Japanese Unexamined Patent Publication No. 7-23739
PTL 3: Japanese Unexamined Patent Publication No. 2-5828
PTL 4: Japanese Examined Patent Publication No. 61-11573
PTL 5: Japanese Examined Patent Publication No. 63-19136
PTL 6: Japanese Examined Patent Publication No. 5-87214
PTL 7: Japanese Patent No. 4272912

### Summary of Invention

### Technical Problem

In PTL 1, however, eggs are used to improve swelling, which increases the cholesterol content of the resulting confectioneries due to high cholesterol in eggs. Moreover, the confectioneries of PTL 2 comprise plant fiber, which is known as a health food that is good for the body; however, it is not efficient to use dietary fiber as an ingredient of the confectioneries, while removing dietary fiber other than soybean protein, etc., from soybeans. Furthermore, the use of soybean protein or gelling soy protein in PTL 1 to PTL 3 prevents the intake of all of the nutritional components of soybeans.

Meanwhile, since soybeans are rich in nutrition (e.g., isoflavone) beneficial for the human body, as described above, there is a demand for food products that have no smell of raw soybeans, and that allow a high intake of soybeans in an easy manner. In spite of the demand, existing food products do not always allow a high intake of soybeans in an easy manner. There are confectioneries as easy-to-eat food products; however, in order to eliminate the smell of raw soybeans, conventional soybean confectioneries use a part of the soybean components (e.g., soy protein), or have a lower content of soybean-derived components, as described above. Accordingly, such confectioneries fail to allow a high intake of all of the soybean-derived components in an easy manner. In addition, baking performed with a high soybean content results in roasted bean-like strong bitterness.

Under such current circumstances, the present invention is intended to provide a novel food product that has no smell of raw soybeans or bitterness, and that allows intake of all of the nutritional components derived from soybeans (soybean components other than the seed coat) in an easy manner. That is, an object of the present invention is to provide a food product that allows intake of all of the nutritional components of soybeans, has no smell of raw soybeans or bitterness, has good flavor, is easy to eat, can increase the soybean content while suppressing bitterness, and can be eaten by children and adults.

### Solution to Problem

The present inventors conducted extensive research to solve the above problems, and consequently found that the object of the present invention can be achieved by using soybeans, starch, and pregelatinized starch, and baking to prepare a hollow-shaped confectionery.

More specifically, the present invention provides a hollow-shaped confectionery comprising the above components, which is an easy-to-eat food having a chip-like texture. Since the food of the present invention has a chip-like texture, i.e., a crunchy or crisp, light texture, and a smooth taste, the food can be eaten by children and adults. Moreover, the hollow-shaped confectionery of the present invention comprising the above components is tasty without the smell of raw soybeans and roasted bean-like bitterness, in spite of containing soybeans so as to use all of the soybean nutritional components. Furthermore, owing to the use of three components, i.e., soybeans, starch, and pregelatinized starch, the hollow-shaped confectionery of the present invention can be sufficiently swollen into a hollow shape. Due to the mixture of these three components, an excellent hollow-shaped confectionery can be obtained even at a high soybean content. In the prior art, a high soybean content increases roasted bean-like bitterness; however, a hollow-shaped confectionery comprising the above three components, as in the present invention, has a crunchy texture and less bitterness, and therefore has good fragrance. The hollow-shaped confectionery is hereafter referred to as the "hollow confectionery."

PTL 4 to PTL 7 disclose confectioneries using wheat flour, which are conventionally known as hollow confectioneries. However, hollow confectioneries using wheat flour, as disclosed in PTL 4 and PTL 6, require a complicated production process, and are not suitable for a case where dough is rolled out and formed into a desired shape. The powdery texture of the hollow confectioneries disclosed in PTL 4 and PTL 5 is removed by frying the dough after baking to allow the flour to cook out. Accordingly, a high intake of oils and fats is unavoidable, and hollow confectioneries produced by such a technique are therefore not preferable in terms of health management. The hollow confectioneries disclosed in PTL 4, PTL 6, and PTL 7 have a relatively high sugar content so as to achieve better handling of the dough and swelling of the confectioneries. Accordingly, a high intake of such hollow confectioneries may cause an excessive intake of sugar, and they are therefore not preferable in terms of health management.

The present inventors conducted extensive research to solve the above problems, and consequently found that when dough comprising soybeans, a starch, and a pregelatinized starch is baked into a hollow shape, (1) the resulting hollow confectionery has no smell of raw soybeans and roasted bean-like bitterness, has sufficient strength as a hollow confectionery, is not overly hard, has a crunchy or crisp, light texture when crunched by the teeth, and has a smooth taste; and (2) the hollow confectionery can be easily and efficiently obtained by only heat-treatment of the dough, without the addition of other swelling agents, oil-frying treatment, or the use of devices, such as an extruder.

The present inventors also found that when a relatively large amount of saccharides is added to dough comprising soybeans, as with conventional hollow confectioneries using wheat flour, the dough is sticky and has less handling; and that when an equivalent amount of lipid, as in the prior art, is added to dough comprising soybeans, swelling is not sufficient. This is presumably attributable to the significant difference in the composition between soybeans and wheat flour used as main starting materials of conventional hollow confectioneries. For example, carbohydrate occupies 70% or more of whole wheat flour, whereas the main component of soybean is protein, which occupies 30 to 45% of whole soybean. Further, the carbohydrate content of soybean is about 10 to 22%, and about 16% of carbohydrate is present in the form of dietary fiber.

The present inventors conducted further research based on the above new findings, and consequently found that a solid material or edible solid material can be easily placed in the hollow, without making a hole in the shell of the hollow confectionery, by covering the solid material or dough serving as the edible solid material with the dough. The present inventors also found that the edible solid material placed in the hollow in this manner does not adhere to the inner wall of the hollow, is freely movable in the hollow, and can make a rattling sound.

The present invention has been accomplished based on the above findings. The following shows typical examples of the present invention.
Item 1. A hollow confectionery obtained by baking dough comprising soybeans, a starch, and a pregelatinized starch.
Item 2. The hollow confectionery according to Item 1, wherein the proportion of soybeans is 1 to 80 parts by weight per 100 parts by weight of dough, on a dry weight basis.
Item 3. The hollow confectionery according to Item 1 or 2, wherein the proportion of starch is 5 to 90 parts by weight per 100 parts by weight of dough, on a dry weight basis.
Item 4. The hollow confectionery according to any one of Items 1 to 3, wherein the proportion of pregelatinized starch is 5 to 50 parts by weight per 100 parts by weight of dough, on a dry weight basis.
Item 5. The hollow confectionery according to any one of Items 1 to 4, wherein the soybeans are in the form of a powder or paste.
Item 6. The hollow confectionery according to any one of Items 1 to 5, wherein the pregelatinized starch contains a pregelatinized modified starch.
Item 7. The hollow confectionery according to Item 6, wherein the proportion of pregelatinized modified starch is 1 to 49 parts by weight per 100 parts by weight of dough, on a dry weight basis.
Item 8. The hollow confectionery according to any one of Items 1 to 7, wherein the starch is at least one member selected from the group consisting of cassava starch, arrowroot starch, white potato starch, rice starch, wheat starch, sago starch, sweet potato starch, potato starch, corn starch, waxy corn starch, high-amylose corn starch, bracken starch, lotus root starch, mung bean starch, adzuki bean starch, kidney bean starch, and pea starch.
Item 9. The hollow confectionery according to any one of Items 1 to 8, wherein the pregelatinized starch is at least one member selected from the group consisting of pregelatinized cassava starch, pregelatinized arrowroot starch, pregelatinized white potato starch, pregelatinized rice starch, pregelatinized wheat starch, pregelatinized sago starch, pregelatinized sweet potato starch, pregelatinized potato starch, pregelatinized corn starch, pregelatinized waxy corn starch, pregelatinized high-amylose corn starch, pregelatinized bracken starch, pregelatinized lotus root starch, pregelatinized mung bean starch, pregelatinized adzuki bean starch, pregelatinized kidney bean starch, and pregelatinized pea starch.
Item 10. The hollow confectionery according to any one of Items 6 to 9, wherein the pregelatinized modified starch is at least one member selected from the group consisting of pregelatinized hydroxypropyl starch, pregelatinized distarch phosphate, and pregelatinized hydroxypropyl distarch phosphate. Item 11. The hollow confectionery according to any one of Items 1 to 10, wherein the pregelatinized modified starch is at least one member selected from the group consisting of pregelatinized modified cassava starch, pregelatinized modified arrowroot starch, pregelatinized modified white potato starch, pregelatinized modified rice starch, pregelatinized modified wheat starch, pregelatinized modified sago starch, pregelatinized modified sweet potato starch, pregelatinized modified potato starch, pregelatinized modified corn starch, pregelatinized modified waxy corn starch, pregelatinized modified high-amylose corn starch, pregelatinized modified bracken starch, pregelatinized modified lotus root starch, pregelatinized modified mung bean starch, pregelatinized modified adzuki bean starch, pregelatinized modified kidney bean starch, and pregelatinized modified pea starch.
Item 12. The hollow confectionery according to any one of Items 1 to 11, wherein the hollow formed with a shell is substantially a single space.
Item 13. The hollow confectionery according to any one of Items 1 to 12, which has a content in the hollow.
Item 14. The hollow confectionery according to Item 13, wherein the content is an edible material.
Item 15. The hollow confectionery according to Item 14, wherein the edible material is an edible solid material.
Item 16. The hollow confectionery according to Item 15, wherein the edible solid material is movable in the hollow.
Item 17. The hollow confectionery according to any one of Items 12 to 16, wherein the content is placed in the hollow, without making a hole in the shell that forms the hollow.
Item 18. The hollow confectionery according to any one of Items 12 to 17, wherein the edible solid material is selected from nuts and seeds, and a baked confectionery.
Item 19. The hollow confectionery according to any one of Items 14 to 18, wherein the edible solid material is obtained by heating dough comprising soybeans, a starch, and a pregelatinized starch.
Item 20. The hollow confectionery according to Item 19, wherein the proportion of the starting materials, i.e., soybeans, starch, and pregelatinized starch, of the edible solid material is 1 to 80:10 to 90:5 to 50, on a dry weight basis.
Item 21. A method for producing a hollow confectionery, comprising the steps of:
(1) preparing dough comprising soybeans, a starch, and a pregelatinized starch; and
(2) baking the dough.
Item 22. The method according to Item 21, further comprising the step of forming the dough into a sheet.
Item 23. The method according to Item 22, further comprising the step of superimposing two dough sheets.
Item 24. The method according to any one of Items 19 to 23, further comprising the step of covering a material or dough as the content with the dough sheet.

### Advantageous Effects of Invention

The present invention provides a food product that allows for children and adults to easily intake all of the nutritional components of soybeans, that is, a hollow-shaped confectionery (hereinafter referred to as the "hollow confectionery"). In spite of the use of soybeans, including the use of all of the soybean nutritional components, the hollow confectionery of the present invention is tasty, without the smell of raw soybeans and roasted bean-like bitterness.

Even at a relatively high content of soybeans, the hollow confectionery of the present invention has an excellent hollow. Since the shell forming the hollow has sufficient strength as a confectionery, the hollow confectionery is hard to break and excellent in handling, such as portability. On the other hand, the shell of the hollow confectionery of the present invention is not overly hard, and can provide a crunchy or crisp, light texture when crunched by the teeth. In addition to such an excellent texture, the hollow confectionery of the present invention has a smooth taste, without clinging or sticking to the teeth after being crunched. That is, the hollow confectionery of the present invention has strength in the shell, a light texture upon being bitten, and a smooth taste. Furthermore, since the confectionery of the present invention has a hollow shape and a crunchy texture, roasted bean-like bitterness is ameliorated even at a high soybean content; rather, good fragrance is imparted.

Because of the use of soybeans as a starting material, the hollow confectionery of the present invention enables consumers to easily intake nutrients derived from soybeans, and in particular to receive physiological functions due to isoflavones and other components contained in soybeans. Moreover, because there is no need for an oil-frying process, the hollow confectionery of the present invention can keep the oil and fat content low, and achieve a low number of calories; and is therefore suitable as a diet food. Such a low oil and fat content results in the prevention of stickiness on the surface of the confectionery, and leads to excellent preservation stability. Accordingly, the addition of other preservatives can be reduced. Furthermore, because there is no need to use eggs and leavening agents (e.g., baking powder), the hollow confectionery of the present invention is also suitable for consumers for whom the intake thereof is undesirable.

Since the hollow confectionery of the present invention can be easily produced by forming dough comprising soybeans, a starch, and a pregelatinized starch into a desired shape, followed by heat-baking, there is no need to use a device for forming a hollow, such as an extruder. Accordingly, the form of the hollow confectionery of the present invention can be easily changed depending on the consumers' preference, etc. The hollow confectionery of the present invention has a rounded, puffy, three-dimensional shape as a whole, because the dough formed into various shapes is swollen upon heat-baking. Hence, consumers can visually enjoy the appearance of the hollow confectionery of the present invention.

The hollow confectionery of the present invention can have a content in the hollow without making a hole. When a solid material is present in the hollow contains a solid material, the solid material can be rolled in the hollow. Therefore, a rattling sound can be made by shaking the hollow confectionery. Thus, the hollow confectionery of the present invention can satisfy not only the consumers' sense of taste and vision, but also their sense of hearing.

The method for producing hollow confectioneries of the present invention prevents cracking in baked confectioneries after baking because of the use of dough comprising soybeans, a starch, and a pregelatinized starch, while allowing efficient production of hollow confectioneries having excellent properties as described above.

### Description of Embodiments

The present invention is described in detail below.

### 1. Hollow Confectionery

The present invention provides a hollow confectionery obtained by baking dough comprising soybeans, a starch, and a pregelatinized starch. In this specification, the hollow confectionery obtained by baking dough comprising soybeans, a starch, and a pregelatinized starch is also referred to as "the hollow confectionery of the present invention."

### (A) Soybean

The dough for producing the hollow confectionery of the present invention contains soybeans as a component. Although the form of soybean is not particularly limited as long as the form is suitable for kneading with the dough for producing the hollow confectionery, powdered and/or pasty soybeans are preferably used.

Any powdered soybeans (i.e., soybean powders) can be used without limitation, as long as they are known as soybean powders in the food field. Examples of known soybean powders include those that are prepared by simply forming raw soybeans into powder, and those that are further subjected to heating, degreasing, removal of trypsin inhibitor, or like treatment. These soybean powders can be used without limitation as the soybeans to be contained in the dough for producing the hollow confectionery of the present invention.

Therefore, commercially available soybean powders can be used as they are; alternatively, soybean powders produced from soybeans can also be used. Soybean powders, when produced, can be produced according to a known method. For example, soybean skins are removed from soybeans, and the separated soybeans are heated and pulverized. An example of such a method is disclosed in Japanese Unexamined Patent Publication No. 2006-129877 as a method for producing a processed soybean flour material.

The pulverization of soybeans can be carried out using various devices for general pulverization. For example, a mill, grinder, etc., can be used. In a specific pulverization process, for example, soybeans are first crushed by rolling into flakes, and the flakes are then dried, finally followed by grinding using a grinder, etc. The degree of pulverization is not particularly limited, as long as the degree is suitable for the production of the hollow confectionery; and can be suitably determined.

Any pasty soybeans (i.e., soybean pastes) can be used without limitation as a component of the dough for producing the hollow confectionery of the present invention, as long as they are known as soybean pastes in the food field. Commercially available soybean pastes can be used as they are; alternatively, soybean pastes produced from soybeans can also be used. Soybean pastes can be produced according to a known method. For example, raw soybeans are immersed in water for a suitable period of time, and then steamed for a suitable period of time. The steamed soybeans are washed, as appropriate, and crushed through a fine sieve, etc., to obtain a soybean paste.

The species, etc., of raw soybeans for producing soybean powders or soybean pastes is not limited, and various species generally known as soybeans can be used. For example, black soybeans and mung beans can be used.

### (B) Starch

The starch used as a starting material of the hollow confectionery of the present invention is a general starch other than those known as pregelatinized starch and modified starch in the food field. The source of the starch is not particularly limited, as long as it is used in the food field, and commercially available starches can be used as they are. Specific examples thereof include grain starches, such as wheat starch, rice starch (e.g., glutinous rice starch and non-glutinous rice starch), corn starch, waxy corn starch, and high-amylose corn starch; potato starches, such as white potato starch, cassava (tapioca) starch, sweet potato starch, lotus root starch, arrowhead starch, and potato starch; bean starches, such as mung bean starch, pea starch, broad bean starch, adzuki bean starch, and kidney bean starch; wild plant starches, such as arrowroot starch, dogtooth violet starch, and bracken starch; stem starches, such as sago starch; and the like.

These starches can be used singly or in a combination of two or more, depending on the desired texture, quality, etc., of the hollow confectionery. Preferred starches in terms of imparting a light texture to the hollow confectionery are cassava starch, arrowroot starch, rice starch, wheat starch, sago starch, sweet potato starch, potato starch, corn starch, waxy corn starch, high-amylose corn starch, bracken starch, lotus root starch, white potato starch, mung bean starch, adzuki bean starch, kidney bean starch, and pea starch.

Starch generally contains amylose and amylopectin. There is no limitation on the proportion of amylopectin and amylose in the starch used in the present invention.

The above-described starches can be partially replaced by modified starches. Modified starches referred to herein are distinguished from pregelatinized modified starches, described later, and are not pregelatinized (non-pregelatinized modified starches). The use of modified starch as a part of the starch enhances the return adequacy of the dough. The term "return adequacy" refers to the property of the dough that the physical properties (e.g., flexibility and handling) of the dough do not or hardly change, even after the dough is repeatedly formed. The type of modified starch usable in the present invention is not particularly limited; however, in terms of improving return adequacy, preferably, at least one member selected from the group consisting of acetylated distarch adipate, acetylated distarch phosphate, acetylated oxidized starch, starch sodium octenyl succinate, starch acetate, oxidized starch, hydroxypropyl starch, hydroxypropyl distarch phosphate, phosphated distarch phosphate, monostarch phosphate, and distarch phosphate can be suitably selected and used.

### (C) Pregelatinized starch

The dough for producing the hollow confectionery of the present invention comprises a pregelatinized starch. Although there is no theoretical limitation, dough comprising a pregelatinized starch is swollen well. Pregelatinized starch is also called gelatinized starch or cold-water-soluble starch. The type of pregelatinized starches (e.g., pregelatinization process, source, and involvement of other treatments) usable in the present invention is not limited, as long as they are suitable for the production of the hollow confectionery. Therefore, commercially available pregelatinized starches may be suitably purchased and used; alternatively, pregelatinized starches can be produced according to a standard method. For example, a pregelatinized starch can be obtained in such a manner that water is added to starch to prepare dough, and the dough is extruded through an extruder under heating and pressure, followed by rapid cooling, drying and pulverization.

Specific examples of pregelatinized starches include those obtained by pregelatinizing various starches shown in section (B) above under the title of "Starch." More preferred pregelatinized starches in terms of imparting excellent swelling and light, crunchy texture to the resulting hollow confectionery are pregelatinized cassava starch, pregelatinized arrowroot starch, pregelatinized white potato starch, pregelatinized rice starch, pregelatinized wheat starch, pregelatinized sago starch, pregelatinized sweet potato starch, pregelatinized potato starch, pregelatinized corn starch, pregelatinized waxy corn starch, pregelatinized high-amylose corn starch, pregelatinized bracken starch, pregelatinized lotus root starch, pregelatinized mung bean starch, pregelatinized adzuki bean starch, pregelatinized kidney bean starch, pregelatinized pea starch, and the like.

The pregelatinized starch used in the present invention may be a pregelatinized modified starch that has been subjected not only to pregelatinization, but also to other processing treatments. When a pregelatinized modified starch is used, all or a part of the pregelatinized starch can be replaced by the pregelatinized modified starch. When all of the pregelatinized starch is replaced by a pregelatinized modified starch, swelling is sufficient, while adhesion to the teeth tends to be higher. In this specification, starches that have been subjected not only to pregelatinization but also to other treatments are referred to as "pregelatinized modified starches," in order to distinguish them from starches that have not been subjected to such other treatments. Examples of the type of treatments other than pregelatinization include, but are not limited to, oxidation, crosslinking, etherification, esterification, moist-heat treatment, oiling treatment, grafting, roasting, and porosity formation. In this specification, in order to distinguish from such pregelatinized modified starches, pregelatinized starches that have not been subjected to other treatments as described above are referred to as "pregelatinized non-modified starches," as necessary. Pregelatinized modified starches are commercially available, and such commercial products can be suitably purchased and used. Alternatively, pregelatinized modified starches can be produced from starches according to a standard method.

Preferred pregelatinized modified starches in terms of improving the swelling of the dough and imparting a lighter, crunchy or crisp texture to the hollow confectionery are pregelatinized etherified starches, pregelatinized crosslinked starches, and pregelatinized ether-crosslinked starches. Examples of pregelatinized etherified starches include pregelatinized hydroxypropyl starches, pregelatinized carboxymethyl starches, and pregelatinized cationic starches; preferable are hydroxypropyl starches. Examples of pregelatinized crosslinked starches include pregelatinized distarch phosphate and pregelatinized distarch glycerol; preferable is pregelatinized distarch phosphate. Among pregelatinized etherified starches, pregelatinized crosslinked starches, and pregelatinized etherified crosslinked starches, preferable are pregelatinized ether-crosslinked starches, and particularly preferable is hydroxypropyl distarch phosphate.

The type of such pregelatinized modified starches is not particularly limited. For example, various starches shown in section (B) above under the title of "Starch" can be used as pregelatinized modified starches after being subjected to various treatments as described above. Specific examples of pregelatinized modified starches include pregelatinized modified cassava starch, pregelatinized modified arrowroot starch, pregelatinized modified white potato starch, pregelatinized modified rice starch, pregelatinized modified wheat starch, pregelatinized modified sago starch, pregelatinized modified sweet potato starch, pregelatinized modified potato starch, pregelatinized modified corn starch, pregelatinized modified waxy corn starch, pregelatinized modified high-amylose corn starch, pregelatinized modified bracken starch, pregelatinized modified lotus root starch, pregelatinized modified mung bean starch, pregelatinized modified adzuki bean starch, pregelatinized modified kidney bean starch, pregelatinized modified pea starch, and the like. Preferable are cassava starch and white potato starch. White potato starch is preferably a waxy-type starch.

As the pregelatinized starch used in the dough for producing the hollow confectionery of the present invention, one or more members suitably selected from the above-mentioned various pregelatinized starches can be used. In one preferred embodiment, a pregelatinized starch that has not been subjected to any treatment other than pregelatinization is used in combination with a pregelatinized modified starch as starting materials of the dough for producing the hollow confectionery of the present invention.

### (D) Other starting materials

The hollow confectionery of the present invention may be produced using only a soybean powder, starch, and pregelatinized starch as starting materials. Various other starting materials generally used in the confectionery field can be added to the hollow confectionery of the present invention within a range that does not impair properties such as excellent crunchiness, texture, flavor, strength of the shell, and degree of swelling. Such other components are, for example, saccharides, protein materials, lipids, salts, seeds, enzymes, flavorings, seasonings, and various food additives.

Examples of saccharides include monosaccharide, disaccharide, oligosaccharide, sugar alcohol, starch syrup, starch degradation product, and water-soluble dietary fiber. Any saccharides commercially available in this field can be used. Specific examples thereof include sugar, isomerized sugar, glucose, maltose, lactose, trehalose, maltitol, and palatinit; starch degradation products, such as starch syrup and dextrin; and dietary fiber, such as polydextrose. In order to adjust the desired degree of sweetness, texture, and baked color of the baked confectionery, the shape associated with the degree of swelling, etc., one or more types of saccharides can be used, as necessary.

Examples of protein materials include dairy products, such as milk and defatted milk; milk proteins, such as casein, albumin, and globulin; gelatin, whole egg, egg white, egg yolk, whole egg powder, etc. However, the dough for producing the hollow confectionery of the present invention is sufficiently swollen by heat treatment, even without containing eggs; thus, the use of eggs can be avoided in terms of egg allergy, etc.

As lipids, various known edible oils and fats can be used without limitation. Examples thereof include rice oil, cottonseed oil, corn oil, soybean oil, olive oil, sunflower oil, cacao butter, sesame oil, safflower oil, peanut oil, butter, lard, coconut oil, nut oil, palm oil, rapeseed oil, margarine, shortening, and other animal and vegetable oils. These can be used singly or in a combination of two or more.

As seeds, various known seeds generally used for baked confectionery, etc., can be used. For example, almond, soybean, etc., can be used. These seeds can be mixed into the hollow confectionery, for example, in such a manner that the seeds are broken and kneaded into the dough. Additionally, seed coats can also be used by kneading them into the dough.

Examples of enzymes include various types of protease, amylase, cellulase, etc., that are generally well known to be used in confectionery. The addition of such enzymes gives a smooth taste to the soybean powder.

Further, various additives for enhancing nutritional value, imparting flavor, and coloring can be added, as necessary.

As such additives, those generally used in various food products to be prepared can be added within a range that does not impair the effects of the present invention.

Examples of such additives include various vitamins for enhancing nutritional value (e.g., vitamin A, vitamin B1, vitamin B2, vitamin B6, vitamin B12, vitamin C, vitamin D, vitamin E, niacin, folic acid, and pantothenic acid); minerals (e.g., calcium, iron, potassium, sodium, magnesium, phosphorus, chlorine, and other salts); and the like. Other examples of additives include flavoring agents for imparting flavor (synthetic and natural flavoring agents), natural sweeteners (e.g., thaumatin and stevia), synthetic sweeteners (e.g., saccharin, sucralose, and aspartame), soy sauce, miso, chemical seasonings, flavor substances (e.g., cheese and chocolate), caramel and natural coloring agents for coloring, emulsifiers (e.g., sucrose fatty acid ester, lecithin, glycerin fatty acid ester, and polyglycerol fatty acid ester), stabilizers, preservatives, etc. These additives can be used singly or in a combination of two or more.

### (E) Proportion of components, etc.

The proportion of the starting materials (soybeans, starch, and pregelatinized starch) of the hollow confectionery of the present invention can be suitably determined in consideration of the nutritional value, flavor, etc., obtained from soybeans, swelling resulting from a combination with other components, the strength of the shell, and texture.

The amount of soybeans added to the dough for producing the hollow confectionery of the present invention is not particularly limited; however, in terms of allowing a larger amount of nutrients derived from soybeans to be taken in an easy manner, a higher soybean content is preferable as long as the excellent texture, flavor, etc., of the hollow confectionery can be retained. At an overly low soybean content, the resulting hollow confectionery has insufficient strength and lower swelling, even when a pregelatinized starch is used in combination. Consequently, an excellent texture cannot be obtained. From such a viewpoint, the amount of soybeans is, for example, 1 part by weight or more, preferably 25 parts by weight or more, more preferably 30 parts by weight or more, even more preferably 35 parts by weight or more, and still more preferably 40 parts by weight or more, per 100 parts by weight of dough, on a dry weight basis. In contrast, with an excessive proportion of soybean powder, the resulting hollow confectionery is hard; and in terms of flavor, the smell of raw soybeans and bitterness are remarkable. From such a viewpoint, the amount of soybean powder is preferably 80 parts by weight or less, and more preferably 70 parts by weight or less, per 100 parts by weight of dough, on a dry weight basis.

The addition of the starch prevents shrinkage of the dough after forming and the stickiness of the hollow confectionery adhering to the teeth when eaten, which are caused by the strong viscosity of pregelatinized starch, as well as imparts a crunchy or crisp, nice texture to the hollow confectionery. However, with an excessive content of starch, the dough easily tears, making the forming of the dough difficult. From such a viewpoint, the amount of starch is, for example, 5 to 90 parts by weight, preferably 10 to 60 parts by weight, and more preferably 15 to 40 parts by weight, per 100 parts by weight of dough, on a dry weight basis.

As described in section (B) above, the return adequacy of the dough can be improved by replacing a part of the starch added to the dough by a modified starch. From such a viewpoint, the amount of modified starch (non-pregelatinized modified starch) added to the dough is, for example, 1 to 89 parts by weight, and preferably 1 to 80 parts by weight, per 100 parts by weight of dough, on a dry weight basis. When a starch and a modified starch are used in combination, the amount of starch is, for example, 1 to 89 parts by weight, and preferably 1 to 80 parts by weight, per 100 parts by weight of dough, on a dry weight basis. When a modified starch is used, a pregelatinized modified starch is not necessarily used.

The main purpose of adding a pregelatinized starch is to swell the dough; however, due to its high viscosity, when the pregelatinized starch content is too high, the dough easily shrinks after forming, making it difficult to form the dough into a desired shape. Moreover, when a large amount of pregelatinized starch is added (in particular, a part of the pregelatinized starch may be replaced by a pregelatinized modified starch; when the pregelatinized starch is used in combination with a pregelatinized modified starch by replacing a part of the pregelatinized starch by the pregelatinized modified starch, and when a larger amount of pregelatinized modified starch is added), stickiness clinging to the teeth occurs when the baked confectionery is eaten. Furthermore, when the proportion of pregelatinized starch is higher, the dough becomes more viscous, thus reducing handling of the dough. From such a viewpoint, the amount of pregelatinized starch is, for example, 5 to 50 parts by weight, preferably 5 to 45 parts by weight, and more preferably 10 to 45 parts by weight, per 100 parts by weight of dough, on a dry weight basis.

In the present invention, when a confectionery with a high soybean content is produced, in terms of swelling, sufficient swelling can be achieved by a combination of only soybeans and a pregelatinized starch, or by a combination of only soybeans and a pregelatinized modified starch.

As described in section (C) above under the title of "Pregelatinized starch", the use of a pregelatinized modified starch as the pregelatinized starch improves swelling of the dough, and imparts a crunchy, lighter texture to the resulting confectionery. However, when an excessive amount of pregelatinized modified starch is added, the resulting dough easily shrinks after forming because of the high viscosity of the pregelatinized modified starch. Particularly, a higher content of pregelatinized modified starch causes stickiness clinging to the teeth when the confectionery is eaten. Accordingly, it is possible to use only a pregelatinized modified starch as the pregelatinized starch in the dough; however, in terms of preventing stickiness to the teeth and imparting a light texture to the hollow confectionery, it is preferable to replace a part of the pregelatinized starch in the dough by a pregelatinized modified starch. That is, only a pregelatinized starch may be used as the pregelatinized starch, and it is preferable to use a pregelatinized modified starch in combination with a pregelatinized starch that has not been subjected to any treatment other than pregelatinization, by replacing a part of the pregelatinized starch by the pregelatinized modified starch.

The following describes the proportion of a pregelatinized modified starch and a starch that has not been subjected to any treatment other than pregelatinization, when used in combination. Hereinafter, starches that have not been subjected to any treatment other than pregelatinization are referred to as "pregelatinized non-modified starches." Pregelatinized non-modified starches may have been subjected to treatments other than those generally known to be performed to obtain modified starches.

When a pregelatinized non-modified starch and a pregelatinized modified starch are used in combination, the amount of pregelatinized non-modified starch is generally 1 to 49 parts by weight, and preferably 1 to 40 parts by weight, per 100 parts by weight of dough, on a dry weight basis.

When a pregelatinized non-modified starch and a pregelatinized modified starch are used in combination, the amount of pregelatinized modified starch is generally is 1 to 49 parts by weight, and preferably 1 to 40 parts by weight, per 100 parts by weight of dough, on a dry weight basis.

In the present invention, the hollow confectionery may be produced by using all four types of starches, i.e., starch, modified starch, pregelatinized starch, and pregelatinized modified starch. In such a case, the hollow confectionery is produced by suitably adjusting the proportion of these four components in view of the characteristics of each component, the flavor and texture of the resulting confectionery, and other properties.

In addition to the above components, water or liquid in which other components are dissolved or suspended in water is generally added in the production of the dough. The moisture content of the dough is generally 30 to 60 parts by weight, per 100 parts by weight of dough, on a dry weight basis.

The moisture content of the hollow confectionery after baking is generally 40 mg/g or less, preferably 35 mg/g or less, and more preferably 25 mg/g or less.

The starting materials described in section (D) above under the title of "Other starting materials" can be suitably added within a range that does not impair the excellent characteristics (e.g., texture, flavor, swelling, and strength of the shell) of the hollow confectionery of the present invention.

When saccharides are added to the hollow confectionery of the present invention, it is preferable to add a small amount of saccharides sufficient for adjusting the taste of the confectionery, in terms of avoiding excessive intake of saccharides associated with the eating of the hollow confectionery. A high content of saccharides is not preferable, because the dough becomes sticky, adheres easily to molds, burnt deposits during baking, and bakes unevenly. Accordingly, the amount of saccharides added to the dough is preferably less than 10 parts by weight, more preferably 0 to 6 parts by weight, and even more preferably 0 to 3 parts by weight, per 100 parts by weight of the total weight of starch and pregelatinized starch contained in the dough, on a dry weight basis.

Similarly, when lipid is added to the hollow confectionery of the present invention, it is preferable to add a small amount of lipid, in terms of avoiding excessive lipid intake associated with the eating of the hollow confectionery. In addition, when an excessive amount of lipid is added to the dough, swelling may not be sufficient. The lipid as described herein refers to one other than the lipid contained in soybeans described in section (A) above.

### (F) Physical properties of the hollow confectionery

The hollow confectionery of the present invention has a hollow formed with a thin shell obtained by heating the dough comprising the above starting materials. The shell has strength sufficient to prevent, when a plurality of the hollow confectioneries is placed in a container (e.g., a bag or box) and carried, the hollow confectioneries from being easily broken.

The hollow confectionery of the present invention has such strength, while having a crunchy, light texture. Therefore, the shell forming the hollow is preferably not overly thick. From such a viewpoint, the thickness of the dough is generally 0.5 to 5 mm, and preferably 0.5 to 3 mm.

In one preferred embodiment, the hollow confectionery of the present invention substantially has a single hollow. Substantially having a single hollow basically means that, although the hollow confectionery is allowed to have fine holes in the vicinity of the inner wall of the confectionery, one hollow confectionery has a single hollow larger than such fine holes. That is, in one preferred embodiment, the hollow of the hollow confectionery is distinguished from the shape of a number of various sized holes that bread, crackers, rice crackers, deep-fried rice crackers, cookies, and other puffed confectioneries and foods typically have.

Furthermore, the hollow of the hollow confectionery of the present invention preferably has a structure in which, when the hollow contains a solid material, such as beans, the solid material is movable in the hollow. More specifically, the inner wall of the shell forming the hollow preferably has no significant projections.

The hollow confectionery of the present invention can be formed into various puffy, rounded three-dimensional shapes by forming the dough into desired shapes, followed by heat treatment. For example, the hollow confectionery of the present invention can be formed into the shape of soybean or soybean pod, because of comprising a soybean powder as a starting material, or can be formed into the shape of a ball, semicircle, half moon, bar, or various animals or characters.

### (G) Content

In one preferred embodiment, the hollow confectionery of the present invention has a content in the hollow. The content can be suitably selected depending on the purposes. For example, in addition to edible materials, paper pieces used for the purpose of fortune-telling or sacred lots can be placed in the hollow as the content. In terms of being capable of eaten together with the hollow confectionery, the content is preferably an edible material. As edible materials, any materials used as filling or stuffing in the field of confectionery and food products can be used without limitation. For example, creamy food products, jelly food products, and solid food products can be accommodated in the hollow as edible materials.

Preferred edible materials to be placed in the hollow are those that can be prevented from flowing out from the dough during baking of the dough. Such edible materials are food products in non-liquid form. Examples thereof include baked confectioneries that can be baked together with the dough, food products that are solid at room temperature, and creams and pasty edible materials that have a certain amount of viscosity. Such edible materials are preferable in terms of being capable of simply and efficiently producing hollow confectioneries containing them, because the step of introducing them into the hollow after baking is not required, according to the method described later.

Examples of such baked confectioneries and solid edible materials are as follows: baked confectioneries, such as biscuits, crackers, cookies, and snacks; nuts and seeds, such as soybeans, almonds, macadamia nuts, cashew nuts, walnuts, pistachios, hazelnuts, coffee beans, cacao beans, pine nuts, pumpkin seeds, peanuts, hempseeds, sunflower seeds, gingko nuts, chestnuts, and sesame seeds; processed beans, such as sugared red beans, dried soybeans, and dried fermented soybeans; dried fruits, such as raisin, dried apricot, dried papaya, dried haw, dried apple, dried orange, dried pineapple, dried banana, dried mango, dried coconut, dried cranberry, dried blueberry, dried prune, dried fig, dried peach, dried pear, and dried perssimmon; dried vegetables, such as dried tomato, dried carrot, dried sweet potato, and dried shiitake mushroom; creams, such as custard cream, bean paste cream, cheese cream, and vanilla cream; sauces, such as fruit sauce, vegetable sauce, salsa sauce, chili sauce, and ketchup sauce; candies, such as caramel and fudge; jams, such as strawberry jam, grape jam, marmalade, blueberry jam, quince jam, yuzu jam, and apple jam; butters, such as peanut butter, almond butter, and hazelnut butter; oily confectioneries, such as chocolate; jellies, such as fruit jelly and konjac jelly; and tablet candies, such as soda tablets and supplements.

Preferable among them are baked confectioneries using a soybean powder as a starting material. By placing such baked confectioneries in the hollow, nutrients derived from soybeans can be obtained not only from the shell of the hollow confectionery, but also from the content.

When the edible material is a highly fluid material, such as a liquid, the material can be introduced into the hollow confectionery by making a hole after baking.

The amount and number of edible materials, when placed in the hollow, are not particularly limited. The hollow may contain only a single edible solid material formed into a suitable size, or may contain a plurality of or a maximum number of edible materials, up to the maximum capacity of the hollow. When a solid edible material is placed in the hollow, the hollow confectionery makes a rattling sound when moved, because the content collides with the inner wall of the hollow confectionery. In terms of enjoying such a sound, the preferred number of edible solid materials is, for example, two or three.

According to the present invention, an edible solid material can be placed in the hollow without making a hole in the shell of the hollow confectionery, as described later. Thus, in one preferred embodiment, the hollow confectionery of the present invention is a hollow confectionery in which an edible solid material is placed without making a hole in the shell thereof.

In one preferred embodiment, the edible solid material is a baked confectionery comprising soybeans as a starting material. The baked confectionery can be obtained, for example, by heat-treating dough comprising soybeans, a starch, and a pregelatinized starch, as with the dough of the hollow confectionery of the present invention described above. The dough for producing such a baked confectionery can be produced by suitably mixing soybeans, a starch, and a pregelatinized starch, and adding liquid (e.g., water) to the mixture, followed by kneading. The starting material powders of the baked confectionery as the content are preferably mixed in the same proportion as in the dough of the hollow confectionery described above. In terms of ease of separation between the inner wall of the hollow and the baked confectionery as the content when the hollow confectionery is baked, the moisture content of the dough of the content is preferably less than the moisture content of the dough of the hollow confectionery. Specifically, the moisture content of the dough of the baked confectionery is generally 30 to 60 parts by weight per 100 parts by weight of dough, on a dry weight basis.

### 2. Method for Producing the Hollow Confectionery

The hollow confectionery of the present invention can be produced by the steps of:
(1) preparing dough comprising a soybean powder, starch, pregelatinized starch, and pregelatinized modified starch; and
(2) baking the dough.

### (H) Preparation of dough

In the production method of the present invention, a soybean powder, starch, pregelatinized starch, and, if necessary, other starting materials described above, are prepared, mixed, and kneaded to prepare dough (step (1)). The preparation of the dough by mixing and kneading the components can be performed under standard conditions using a device or the like generally used to obtain uniform dough.

For example, first, the powdered starting materials are weighed and mixed. Weighing of each starting material can be conducted according to the description in section (E) above under the title of "Proportion of components, etc." Then, water and/or a liquid animal protein material with a high moisture content (e.g., milk or whole egg) is added and mixed with the powder mixture, followed by kneading. Thus, the dough for producing the hollow confectionery is obtained. Mixing and kneading of the starting material powders can be performed under suitable temperature conditions; however, at an overly high temperature, starches become too viscous, causing problems in handling, such as difficulty of cutting the dough because of stickiness. From such a viewpoint, the preparation of the dough is preferably carried out at 5 to 45°C.

Next, the dough obtained as above is formed into any shape. For example, the dough is rolled out to a sheet according to a general method using a depositor, roller, or the like, and then cut and formed using, for example, a mold of a desired shape. The thickness of the sheet in this case can be determined as desired in view of the desired size, shape, hardness, strength, texture, etc., of the hollow confectionery; however, the thickness is preferably 0.5 to 5.0 mm, and more preferably 0.5 to 3.0 mm. Forming of the rolled dough can be performed by a general method. For example, the dough can be cut out with a mold of a desired shape. The dough can be formed into any shape, such as a soybean-like shape, or into the shape of various characters, as described above.

### (I) Baking

Subsequently, the formed dough is heat-baked (step (2)). Heat-baking can be carried out while suitably selecting conditions and procedures that are generally used in the production of confectionery, depending on the starting materials used, the moisture content of the dough, etc. The heating temperature range is, for example, about 130 to 280°C, preferably 150 to 260°C, and more preferably 160 to 250°C. The heating time is generally about 8 to 20 minutes, preferably 8 to 15 minutes, and more preferably 8 to 11 minutes.

There are no limitations on the heat source for heat-baking. For example, usable are hot water, steam, electric heater, gas oven, and the like that use combustion heat; far-infrared ray, infrared ray, microwave, high frequency, Joule heat, and other various heat sources.

In the present invention, the dough comprising soybeans, a starch, and a pregelatinized starch is swollen by baking, thereby providing a puffy, rounded, three-dimensional hollow confectionery having a hollow in the center thereof. Baking may be performed on a single dough sheet formed into a desired shape, or on two or more superimposed dough sheets. Due to the containment of soybeans, a starch, and a pregelatinized starch, the dough for producing the hollow confectionery of the present invention exhibits excellent swelling by heat treatment to be turned into a hollow confectionery, even when the dough is a single sheet. When a hollow confectionery in which an edible solid material is placed in the hollow is produced, it is preferable to bake two superimposed dough sheets.

By baking the dough comprising soybeans, a starch, and a pregelatinized starch in the above manner, the resulting hollow confectionery has sufficient strength, as well as a light, crunchy texture, and excellent flavor.

### (J) Containment of edible material

According to the present invention, the hollow confectionery produced in the above manner can contain any edible materials in the hollow. Edible materials can be placed in the hollow by suitably selecting a device and procedure known in this technical field. For example, liquid, gel, jelly, or edible materials that become fluid depending on the temperature control can be introduced into the hollow through a small hole made in the shell of the hollow confectionery. Edible solid materials can also be introduced into the hollow by making a hole in the shell of the hollow confectionery. However, depending on the size of the solid material to be introduced, it may be necessary to make a larger hole, and such a larger hole is difficult to make. Further, the solid material may leak unless the hole is closed, and it is not easy to close a large hole. For this reason, it is preferable to introduce the solid material into the hollow without making a hole in the shell.

To introduce an edible solid material into the hollow without making a hole in the shell forming the hollow, for example, the material to be introduced is covered with dough and then baked. The method of covering the edible solid material with dough is not particularly limited. For example, the edible solid material is placed on a single edible dough sheet, and one end of the sheet is folded so as to wrap the edible solid material. The dough is then cut out with a forming mold, while the surroundings of the upper and lower sheets are pressed to adhere to each other. Alternatively, two dough sheets are prepared and superposed so as to sandwich the edible solid material therebetween. The dough is then cut out by pressing a forming mold from above, and the surroundings of the dough are pressed to adhere to each other. Thus, the edible solid material can be covered with the dough. A hollow confectionery in which an edible solid material is placed in the hollow can be obtained by baking the edible solid material covered with dough, as described above.

When wrapping the content with dough, flour is sprinkled on the surface of the dough to be in contact with the content so that sticking between the inner wall of the hollow confectionery and the content can be stably prevented after baking. The flour to be sprinkled is not particularly limited, as long as the surface of the dough and the content are prevented from sticking to each other. For example, potato starch, corn starch, etc., can be used.

When a baked confectionery is used as the content, a hollow confectionery in which the baked confectionery is placed in the hollow can be produced by wrapping dough to be turned into the baked confectionery after baking, with the dough of the hollow confectionery in the above manner. Since both dough pieces are viscous and easily stick to each other, in addition to sprinkling flour, the moisture content of the dough of the baked confectionery as the content is adjusted to a lower level. This suppresses sticking of the dough pieces to each other. As a result, the baked confectionery can be separated from the inner wall of the hollow after baking.

### Examples

The present invention is described below with reference to specific Test Examples; however, the present invention is not limited thereto.

### Test Example 1: Production of Hollow Confectionery and Evaluation thereof

Predetermined amounts of components shown in the upper part of Table 1 below are prepared and mixed. A proper amount of water is added thereto, and the mixture is kneaded for 10 minutes. The thus-obtained dough is rolled out into a 1-mm-thick sheet, and formed into a circular shape. The dough is then baked in a gas oven preheated to 200°C for 10 minutes. Thus, hollow confectioneries are produced.

The hollow confectioneries obtained as above are evaluated according to the evaluation criteria shown in Table 2 below. The results are shown in the lower part of Table 1. In Table 1, Formulation No. (12) is a Comparative Example, and the other formulations are Examples.

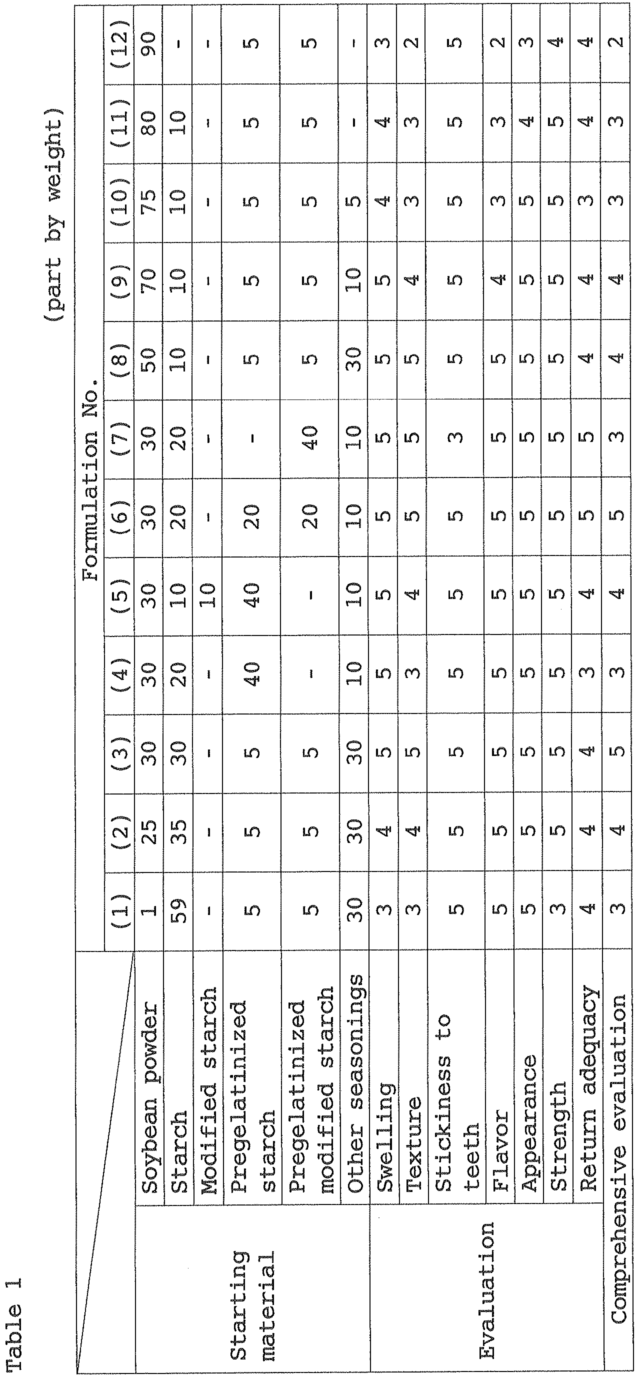

**Table 2**

| Evaluation item | Point | Criterion |
|---|---|---|
| Swelling | 5 | Sufficient swelling |
| | 1 | No swelling |
| Texture | 5 | Crispy, light texture |
| | 1 | Crunchy, hard texture; or no crunchiness |
| Stickiness to teeth | 5 | Does not stick to teeth |
| | 1 | Easily sticks to teeth |
| Flavor | 5 | No smell of raw soybeans, or bitterness |
| | 1 | Significant smell of raw soybeans, and bitterness |
| Appearance | 5 | Significant burning and uneven baking, and rough surface |
| | 1 | No burning or uneven baking, and smooth surface |
| Strength | 5 | Not easily broken when picked up, and sufficiently strong |
| | 1 | Fragile and easily broken, or too hard to chew |
| Return adequacy | 5 | No change in physical properties after repeated forming of dough |
| | 1 | Harder texture associated with repeated forming of dough |

### Test Example 2 (Example): Production of Hollow Confectionery Containing Edible Solid Material

The dough of Formulation No. (4) produced in Test Example 1 is rolled out into a 1-mm-thick sheet. Meanwhile, as an edible solid material to be placed in the hollow, dough for a baked confectionery as the content is prepared in the following manner. Predetermined amounts of starting materials shown in Table 3 are prepared. After the powder starting materials are mixed, water is added thereto and kneaded.

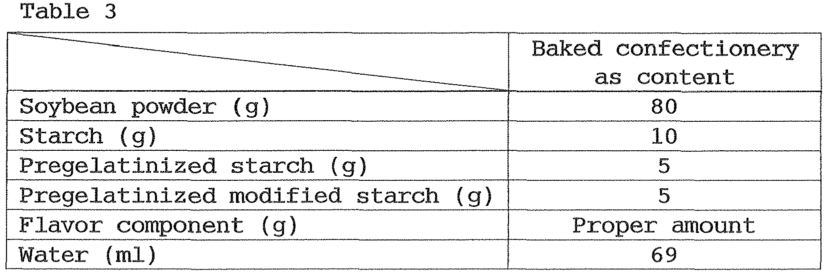

The obtained dough for an edible solid material (0.1 g) is cut and rolled into a ball, which is used as the dough for a baked confectionery as the content. Starch is sprinkled on the first dough sheet produced, and two dough balls are placed in the center of the sheet. Then, another semicircular dough sheet is put thereon so as to sandwich the dough balls for baked confectioneries, and the two sheets are superimposed on each other. A semicircular mold is pressed from above on the sheets to cut out the dough, while pressing the circumferences of the upper and lower dough sheets to adhere to each other. The resultant is baked in a gas oven preheated to 200°C for 10 minutes.

The appearance of the resulting hollow confectionery is a puffy, rounded shape, as with the hollow confectioneries obtained in Test Example 1; however, the edible solid material is present in the hollow, and a rattling sound is made by shaking the hollow confectionery. It is thereby confirmed that the edible solid material is independently present in the hollow confectionery, and is able to roll freely. The shell of the hollow confectionery is opened with a knife to confirm the presence of two ball-like baked confectioneries therein.

### Test Example 3 (Example): Production of Hollow Confectionery Containing Paper

As with Test Example 2, the dough of Formulation No. (1) is rolled out into a 1-mm-thick sheet, and formed into a semicircular shape. Starch is sprinkled on the surface of the dough, and a folded cooking paper piece (5 cm x 5 cm) is placed in the center of the dough. Another dough sheet formed into a semicircular shape is put thereon, and both dough sheets are pressed to adhere to each other. The resultant is baked in a gas oven preheated to 200°C for 10 minutes.

The thus-obtained hollow confectionery is sufficiently swollen, and had a semicircular, puffy, three-dimensional shape. Moreover, when the hollow confectionery is broken, the paper piece appeared therein, and is easily taken out because the paper piece and shell are separated.

### Test Example 4 (Example): Production of Hollow Confectionery and Evaluation Thereof

In Formulation Nos. (5) and (6) of Test Example 1, the starches, modified starches, pregelatinized starches, and pregelatinized modified starches listed below are suitably used in combination to produce hollow confectioneries in the same manner as in Test Example 1. The starches, etc., may be used singly or in combination.

The resulting hollow confectioneries are excellent, almost similar to Test Example 1, although they have slightly different textures, physical properties, and other properties, depending on the combination of starches, etc.

### Starch

Cassava starch, arrowroot starch, rice starch, wheat starch, sago starch, sweet potato starch, potato starch, corn starch, waxy corn starch, high-amylose corn starch, bracken starch, lotus root starch, white potato starch, mung bean starch, adzuki bean starch, kidney bean starch, and pea starch

### Modified starch

Acetylated distarch adipate, acetylated distarch phosphate, acetylated oxidized starch, starch sodium octenyl succinate, starch acetate, oxidized starch, hydroxypropyl starch, hydroxypropyl distarch phosphate, phosphated distarch phosphate, monostarch phosphate, and distarch phosphate

### Pregelatinized starch

Pregelatinized cassava starch, pregelatinized arrowroot starch, pregelatinized white potato starch, pregelatinized rice starch, pregelatinized wheat starch, pregelatinized sago starch, pregelatinized sweet potato starch, pregelatinized potato starch, pregelatinized corn starch, pregelatinized waxy corn starch, pregelatinized high-amylose corn starch, pregelatinized bracken starch, pregelatinized lotus root starch, pregelatinized mung bean starch, pregelatinized adzuki bean starch, pregelatinized kidney bean starch, and pregelatinized pea starch

### Pregelatinized modified starch

Pregelatinized modified cassava starch, pregelatinized modified arrowroot starch, pregelatinized modified white potato starch, pregelatinized modified rice starch, pregelatinized modified wheat starch, pregelatinized modified sago starch, pregelatinized modified sweet potato starch, pregelatinized modified potato starch, pregelatinized modified corn starch, pregelatinized modified waxy corn starch, pregelatinized modified high-amylose corn starch, pregelatinized modified bracken starch, pregelatinized modified lotus root starch, pregelatinized modified mung bean starch, pregelatinized modified adzuki bean starch, pregelatinized modified kidney bean starch, and pregelatinized modified pea starch

## Claims

1. A hollow confectionery obtained by baking dough comprising soybeans, a starch, and a pregelatinized starch.

2. The hollow confectionery according to claim 1, wherein the proportion of soybeans is 1 to 80 parts by weight per 100 parts by weight of dough, on a dry weight basis.

3. The hollow confectionery according to claim 1 or 2, wherein the soybeans are in the form of a powder or paste.

4. The hollow confectionery according to any one of claims 1 to 3, wherein the proportion of pregelatinized starch is 5 to 50 parts by weight per 100 parts by weight of dough, on a dry weight basis.

5. The hollow confectionery according to any one of claims 1 to 4, wherein the pregelatinized starch contains a pregelatinized modified starch.

6. The hollow confectionery according to any one of claims 1 to 5, which has a content in the hollow.

7. The hollow confectionery according to claim 6, wherein the content is an edible solid material.

8. The hollow confectionery according to claim 6 or 7, wherein the content is movable in the hollow.

9. A method for producing a hollow confectionery comprising the steps of:
(1) preparing dough comprising soybeans, a starch, and a pregelatinized starch; and
(2) baking the dough.

10. The method according to claim 9, further comprising the step of forming the dough into a sheet.

11. The method according to claim 10, further comprising the step of superimposing two dough sheets.

12. The method according to any one of claims 9 to 11, further comprising the step of covering an edible solid material with the dough sheet.
